# EUROPÄISCHE PATENTSCHRIFT

(11) **EP 2 121 165 B1**
(45) Veröffentlichungstag und Bekanntmachung des Hinweises auf die Patenterteilung: **21.03.2018**
(21) Anmeldenummer: 07857275.7
(22) Anmeldetag: 06.12.2007
(51) Int. Cl.: B01D 46/00, B01D 46/24

(54) **FLÜSSIGKEITSABSCHEIDER, INSBESONDERE ÖLABSCHEIDER FÜR DRUCKLUFTANLAGEN**
LIQUID SEPARATOR, PARTICULARLY OIL SEPARATOR FOR COMPRESSED AIR SYSTEMS
SÉPARATEUR DE LIQUIDE, NOTAMMENT SÉPARATEUR D'HUILE POUR DES INSTALLATIONS À AIR COMPRIMÉ

(30) Priorität: 14.12.2006 DE 202006019003 U
(43) Veröffentlichungstag der Anmeldung: 25.11.2009
(73) Patentinhaber: Mann + Hummel GmbH, 71636 Ludwigsburg (DE)
(72) Erfinder: HEIKAMP, Wolfgang, 67165 Waldsee (DE)
(86) Internationale Anmeldenummer: PCT/EP2007/063442
(87) Internationale Veröffentlichungsnummer: WO 2008/071621

(56) Entgegenhaltungen:
- EP-A- 1 128 060
- EP-A1- 0 830 885
- DE-U1- 8 501 736
- FR-A- 2 358 613
- GB-A- 1 566 220
- US-A- 4 857 189
- US-A- 5 826 854

## Beschreibung

### Technisches Gebiet

Die Erfindung betrifft einen Flüssigkeitsabscheider nach dem Oberbegriff des Anspruchs 1.

### Stand der Technik

Es sind Flüssigkeitsabscheider bekannt, welche Öltröpfchen aus einem Luftstrom entfernen, beispielsweise aus DE 85 01 736 U1 oder GB 1 566 220 A. Hierzu verfügen die Flüssigkeitsabscheider über ein Abscheidmedium, welches in einem Gehäuse angeordnet ist. Das Gehäuse verfügt über einen Gehäusetopf und einen Gehäusedeckel. Der Gehäusedeckel verfügt über ein Gewinde, mit welchem der Flüssigkeitsabscheider an einen Kopf angeschraubt werden kann. In dem Kopf ist eine Luftleitung für das Luft-Öl-Gemisch und eine Luftreinleitung für die gereinigte Luft angeordnet. Weiterhin verfügt der Kopf über eine Ölableitung. In dem Deckel sind ein Rohlufteinlass sowie ein Reinluftauslass angeordnet. Der Rohlufteinlass ist korrespondierend mit der Luft-Öl-Gemischleitung verbunden. Der Reinluftauslass des Flüssigkeitsabscheiders ist mit dem Reinluftkanal des Kopfes verbunden. Die im zu reinigenden Luftstrom enthaltenen Öltröpfchen werden durch das Abscheidemedium zu größeren Tropfen agglomeriert, welche auf der Innenseite des kreisförmig geschlossenen Abscheidemediums nach unten ablaufen. Das abgeschiedene Öl kann durch einen Ölablauf aus dem Flüssigkeitsabscheider austreten und wird durch die Ölableitung im Kopf abgeführt. Der Flüssigkeitsabscheider verfügt über eine Dichtung, welche zwischen dem Deckel des Flüssigkeitsabscheiders und dem Kopf angeordnet ist. Bei der Montage des Flüssigkeitsabscheiders an den Kopf wird das Gehäuse mit dem Kopf derart verschraubt, dass eine dichtende Verbindung erzeugt wird. Je nachdem, mit welcher Kraft der Flüssigkeitsabscheider an dem Kopf festgeschraubt wird, wird die Dichtung mehr oder weniger verpresst. Bei einer zu geringen Anspresskraft kann es zu Leckagen kommen. Bei einem zu großen Anzugsdrehmoment des Filtergehäuses kann es zu einer Beschädigung der Dichtung kommen oder das erforderliche Lösedrehmoment zu hoch sein, wodurch ein Elementwechsel erschwert ist. Weiterhin muss der Flüssigkeitsabscheider mehrmals um seine eigene Achse gedreht werden, bis eine feste Verbindung erzeugt ist.

Aufgabe der Erfindung ist es daher, einen Flüssigkeitsabscheider zu schaffen, welcher einfach montierbar und zuverlässig in der Handhabung ist. Diese Aufgabe wird durch die Merkmale des Anspruchs 1 gelöst.

### Offenbarung der Erfindung

Der erfindungsgemäße Flüssigkeitsabscheider verfügt über ein Abscheideelement und ein Gehäuse. Das Gehäuse verfügt über einen Einlass für das zu reinigende Gas und einen Auslass für das gereinigte Gas. Weiterhin verfügt das Gehäuse über einen Austritt für die abgeschiedene Flüssigkeit. Das Abscheideelement ist derart in das Gehäuse integriert, dass der Einlass dichtend von dem Auslass getrennt ist. Hierbei verfügt das Abscheideelement über ein Abscheidemedium, welches die in dem Gasstrom enthaltenen Flüssigkeitströpfchen aus dem Gasstrom entfernt. Mit dem Flüssigkeitsabscheider können beliebige Gase von enthaltenen Flüssigkeitströpfchen gereinigt werden. Vorzugsweise kann Luft, insbesondere aus Druckluftanlagen, gereinigt werden. Hierbei können enthaltene Wasser- oder Öltröpfchen aus dem Luftstrom entfernt werden.

Erfindungsgemäß ist die Bajonettverbindung zwischen dem Deckel und dem Gegenpart gebildet und der Deckel verfügt über einen Einlass für das zu reinigende Gas, einen Auslass für das gereinigte Gas und einen radial zwischen Auslass und Einlass angeordneten, mit dem Inneren des Abscheideelements verbundenen Austritt für die abgeschiedene Flüssigkeit.

Das Gehäuse ist mit einer Bajonettverbindung mit einem Gegenpart verbindbar. Der Gegenpart kann z. B. ein Anschlusskopf sein, welcher mit einer Druckluftanlage verbunden ist. Die Bajonettverbindung entsteht durch eine relative Drehbewegung des Flüssigkeitsabscheiders gegenüber dem Gegenpart. Hierzu sind am Flüssigkeitsabscheider und am Gegenpart mehrere Konturen angeordnet, die miteinander in Eingriff kommen und eine Steigung gegenüber der Filterachse aufweisen. Die Steigung erstreckt sich über einen definierten Umfangswinkel und geht in einen parallel zu einem Dichtbereich verlaufenden Bereich über. Weiterhin können die korrespondierenden Konturen derart ausgebildet sein, dass sie innerhalb der Drehbewegung eine Verrastung erzeugen und einen Anschlag zur Begrenzung der Drehbewegung herstellen können. Die Verrastung kann beispielsweise über einen zackenförmigen Verlauf der korrespondierenden Konturen erreicht werden. Alternativ kann die Verrastung auch über bewegliche Wirkelemente hergestellt werden, welche in einer definierten Position in eine Kontur des Gegenpart oder des Flüssigkeitsabscheiders eingreifen. Zwischen dem Flüssigkeitsabscheider und dem Gegenpart ist vorzugsweise eine Elastomerdichtung angeordnet, welche durch die Bajonettverbindung zwischen zwei korrespondierenden Dichtflächen eingespannt ist. Diese Elastomerdichtung kann hierbei sowohl axial als auch radial angeordnet sein. Bei axialer Anordnung der Elastomerdichtung kann diese die für die Rastverbindung notwendige Spannung erzeugen.

Die Mittel zur Herstellung der Bajonettverbindung können bei einer besonderen Ausführungsform fest an dem Gehäuse angeordnet sein. Als Materialien für das Gehäuse, wie auch für die Mittel zu Bildung der Bajonettverbindung, sind sowohl Metalle wie auch Kunststoffe geeignet.

Der erfindungsgemäße Flüssigkeitsabscheider kann ohne Hilfsmittel mit dem Gegenpart verbunden werden, wobei eine definierte Verspannung herstellbar ist. Der Flüssigkeitsabscheider wird von Monteur auf den Gegenpart angesetzt und mit einer Drehung um einen definierten Drehwinkel aufgedreht. Dabei ist der Drehwinkel durch einen Anschlag und / oder eine Rastung der Bajonettverbindung begrenzt. Der Drehwinkel kann z. B. zwischen 45° und 360° betragen. Vorzugsweise beträgt der Drehwinkel zwischen 60° und 180°. Durch die vorgegebene Steigung der Bajonettkontur ist die Einspannung der Dichtung zwischen Flüssigkeitsfilter und Flanschgehäuse definiert und unabhängig von Anzugsdrehmomenten gewährleistet. Dies erlaubt eine einfache und zuverlässige Montage und Demontage des Flüssigkeitsabscheiders.

Bei der radialen Anordnung der Elastomerdichtung wird ein Festsitzen dieser auf der Oberfläche verhindert und somit ein leichtes Lösen des Flüssigkeitsfilters bei der Demontage gewährleistet.

Gemäß einer vorteilhaften Ausgestaltung sind die erforderlichen Geometrien für die Bajonettverbindung zwischen dem Deckel und dem Gegenpart an den Deckel angeformt. Die Geometrien am Deckel können einfach durch z. B. Stanzen oder Umformen erzeugt werden. Der Gehäusetopf kann hierbei als kostengünstiges Tiefziehteil ausgebildet sein, welches einfach herstellbar ist.

Bei einer Integration der Öffnungen in den Deckel kann der Topf als einfach herzustellendes Bauteil ausgestaltet sein. Die für das Gehäuse erforderlichen Funktionsgeometrien wie Ein- und Auslässe oder Absätze und Vorsprünge sind in den Deckel integriert, wodurch lediglich der Deckel an die jeweilige Anbausituation angepasst werden muss.

Gemäß einer besonderen Ausführungsform des erfindungsgemäßen Flüssigkeitsabscheiders ist der Austritt für die abgeschiedene Flüssigkeit in einem in Schwerkraftrichtung unten angeordneten Bereich des Deckels angeordnet. Hierbei ist der Deckel derart mit dem Topf verbunden, dass der Deckel im montierten Bereich unten angeordnet ist. Somit kann die abgeschiedene Flüssigkeit einfach aus dem Flüssigkeitsabscheider ablaufen. Hierbei ist es vorteilhaft, wenn der Austritt für die abgeschiedene Flüssigkeit mit einem Ablauf in dem Gegenpart korrespondiert.

Bei einer besonderen Ausführung ist das Abscheideelement dichtend mit dem Deckel verbunden, wodurch eine Leckage verhindert wird bzw. sich die Verwendung von zusätzlichen Dichtungen erübrigt. Hierbei kann das Abscheideelement mit dem Deckel verklebt oder verschweißt sein.

Gemäß einer vorteilhaften Ausgestaltung verfügt das Abscheideeelement über einen Stützkörper, ein Abscheidemedium und ein Drainagevlies. Hierbei ist der Stützkörper für das zu reinigende Gas durchlässig. Das Abscheidemedium und das Drainagevlies sind derart fest auf dem Stützkörper angeordnet, dass ungewünschte Verformungen verhindert werden. Vorzugsweise sind Abscheidemedium und Drainagevlies als flächiges Gewirke ausgebildet und um den Stützkörper ein- oder mehrlagig gewickelt. Die im Gasstrom enthaltenen Flüssigkeitströpfchen werden durch das Abscheidemedium zurückgehalten und zu größeren Tropfen agglomeriert. Das in Strömungsrichtung hinter dem Abscheidemedium angeordnete Drainagevlies dient der Ableitung der Flüssigkeitstropfen in Richtung des Austritts. Somit können die abgeschiedenen Tropfen einfach und zuverlässig aus dem Gasstrom entfernt und zu dem Austritt geleitet werden.

### Kurze Beschreibung der Zeichnungen

Weitere Einzelheiten der Erfindung werden nachfolgend anhand der Figuren erläutert. Hierbei zeigen

- Figur 1: einen Flüssigkeitsabscheider im Schnitt und
- Figur 2: einen Ausschnitt aus dem Abscheideelement in Schnitt.

### Ausführungsform(en) der Erfindung

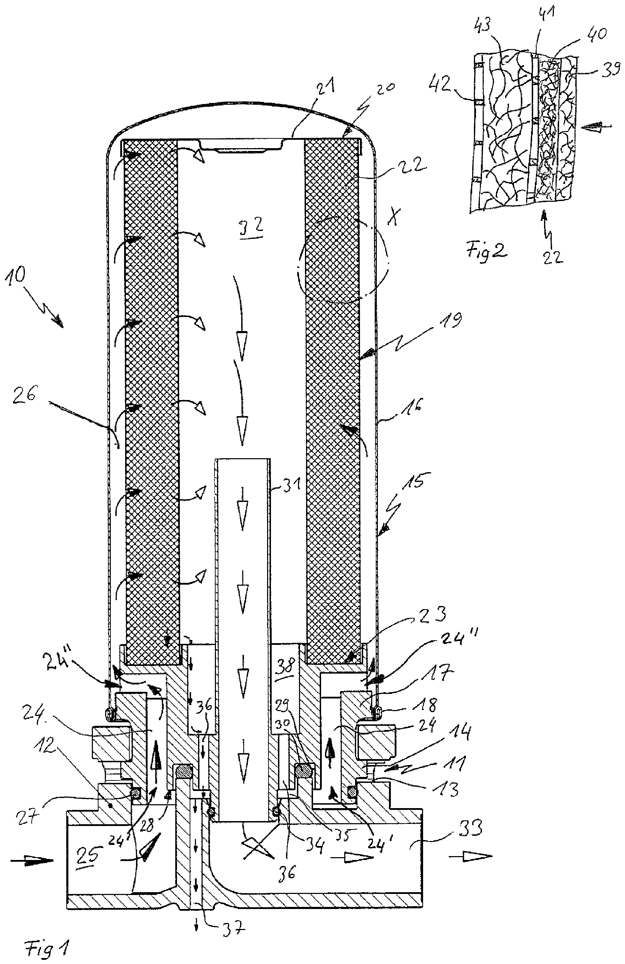

In Figur 1 ist ein Flüssigkeitsabscheider 10 im Schnitt dargestellt. Der Flüssigkeitsabscheider 10 ist mit einer Bajonettverbindung 11 in stehender Position an einem Kopf 12 befestigt. Bei einer alternativen Ausgestaltung kann der Flüssigkeitsabscheider 10 auch in hängender Position mit der Bajonettverbindung 11 an dem Kopf 12 befestigt sein. Der Kopf 12 verfügt über Aufnahmegeometrien 13, in welche Konturen 14 des Flüssigkeitsabscheiders 10 eingreifen und den Flüssigkeitsabscheider 10 an dem Kopf 12 fixieren. Hierbei können die Konturen 14 als Nocken ausgebildet sein. Die Geometrie der Nocken sowie deren Anzahl und Anordnung am Flüssigkeitsabscheider 10 ist an spezifische Kundenwünsche adaptierbar, sofern der Kopf 12 entsprechend ausgestaltet ist. Der Flüssigkeitsabscheider 10 verfügt über ein Gehäuse 15, welches durch einen Topf 16 und einen Deckel 17 gebildet ist. Der Topf 16 ist mittels einer Bördelverbindung 18 mit dem Deckel 17 verbunden. Hierbei kann zwischen dem Deckel 17 und dem Topf 16 eine Dichtung angeordnet sein. Diese Dichtung kann als Einlegeteil ausgeführt sein. Bei anderen Ausgestaltungen kann die Dichtung auch auf den Deckel 17 aufgeschäumt oder aufdosiert sein. Alternativ zu der Bördelverbindung 18 kann der Deckel 17 selbstverständlich auch durch andere Verfahren mit dem Topf 16 verbunden sein. Die Verbindung kann z. B. durch Umlegen einer Kante oder durch Verschweißen erzeugt werden. Die Konturen 14 sind an dem Deckel 17 angeordnet. Bei anderen Ausgestaltungen können die Konturen 14 auch am Topf 16 oder einem zusätzlichen Bauteil angeordnet sein. Innerhalb des Gehäuses 15 ist ein Abscheideelement 19 angeordnet. Das Abscheideelement 19 ist im Wesentlichen als hohlzylindrisches Bauteil ausgeführt. Bei anderen Ausführungen können selbstverständlich auch andere geometrische Formen, wie z. B. ovale oder kegelstumpfförmige Geometrien umgesetzt werden. Das Abscheideelement 19 verfügt an einer oberen Stirnseite 20 über eine Endscheibe 21, welche die obere Stirnseite 20 dichtend verschließt. Hierzu ist die Endscheibe 21 mit einem zylindrisch geschlossenen Abscheidemedium 22 verklebt. Das Abscheidemedium 22 ist mit einer unteren Stirnseite 23 direkt mit dem Deckel 17 verklebt. Dadurch kann für die untere Stirnseite 23 eine zusätzliche Endscheibe entfallen. Bei anderen Ausgestaltungen kann die Verbindung des Abscheidemediums 22 mit der Endscheibe 21 bzw. dem Deckel 17 auch auf andere Art und Weise, insbesondere durch Verschweißen, erzeugt sein. Das Abscheidemedium 22 ist durch einen ein- oder mehrlagigen Glasfaserwickel gebildet. Hierbei kann der Glasfaserwickel über eine Imprägnierung, insbesondere mit Phenolharz verfügen. Eine weitere Ausgestaltung des Abscheidemediums 22 wird nachfolgend anhand von Figur 2 näher erläutert.

Der Deckel 17 verfügt über Einlassöffnungen 24, welche einen Gemischkanal 25 des Kopfes 12 mit einem Rohraum 26 verbinden. Die Einlassöffnungen 24 sind stirnseitig des Deckels 17 auf einem Teilkreis verteilt angeordnet, wobei die stirnseitigen Einlassquerschnitte 24' in am Umfang verteilt angeordnete Auslassquerschnitte 24" übergehen. Zur Abdichtung des Gemischkanals 25 gegenüber der Umgebung verfügt der Deckel 17 über eine O-Ring-Dichtung 27, welche mit einem Innendurchmesser des Kopfes 12 korrespondiert. Um eine gleichmäßige Anströmung aller Einlassöffnungen 24 zu erreichen, verfügt der Deckel 17 über eine axial versetzte Ringstirnfläche 28. Im Bereich der Ringstirnfläche 28 ist eine Aufnahmenut 29 angeordnet, in welcher ein O-Ring 30 dichtend zwischen dem Deckel 17 und dem Kopf 12 verpresst ist. Der Deckel 17 verfügt über ein zentral angeordnetes Reinrohr 31, welches den im Inneren des Abscheideelements 19 angeordneten Reinraum 32 mit einem Reingasauslass 33 verbindet. Zur dichtenden Verbindung des Reinrohrs 31 mit dem Reingasauslass 33 ist ein O-Ring 34 vorgesehen, welcher zwischen dem Kopf 12 und dem Deckel 17 verpresst ist. Die Stirnseite des Reinrohrs 31 steht in axialer Richtung über die Ringstirnfläche 28 hinaus, so dass zwischen den O-Ringen 30, 34 ein Flüssigkeitsraum 35 gebildet ist. Der Flüssigkeitsraum 35 ist über eine Austrittsöffnung 36 mit dem Inneren des Abscheideelements 19 verbunden. Zum gleichmäßigen Austrag der abgeschiedenen Flüssigkeiten sind mehrere Austrittsöffnungen 36 auf einem Teilkreis verteilt angeordnet. Da die Austrittsöffnungen 36 direkt in den Deckel 17 integriert sind, erübrigen sich zusätzliche Dichtungen, da keine abzudichtenden Dichtstellen vorhanden sind. Die Austrittsöffnungen 36 korrespondieren über den Flüssigkeitsraum 35 mit einem im Kopf 12 angeordneten Ablauf 37. Um die durch das Abscheideelement 19 abgeschiedenen Flüssigkeitstropfen einfach aus dem Gehäuse 15 entfernen zu können, verfügt der Deckel 17 über einen kreisringförmigen Aufnahmeraum 38, in welchen die Austrittsöffnungen 36 münden. Das Reinrohr 31 durchragt den Aufnahmeraum 38, wobei die Öffnung des Reinrohrs axial beabstandet zu dem Aufnahmeraum 38 angeordnet ist. Durch diese axiale Beabstandung wird erreicht, dass keine abgeschiedenen Flüssigkeitstropfen in das Reinrohr gelangen können.

Das zu reinigende Flüssigkeit-Gas-Gemisch, insbesondere ein Luft-Öl-Gemisch, strömt durch den Gemischkanal 25 in die Einlassöffnungen 24 des Flüssigkeitsabscheiders 10 ein. Das zu reinigende Gemisch strömt vom Rohraum 26 durch das Abscheideelement 19 hindurch, wobei das Abscheidemedium 22 die enthaltenen Flüssigkeitströpfchen zurückhält. Das gereinigte Gas tritt in den Reinraum 32 ein und wird in Strömungsrichtung durch das Reinrohr 31 zu dem Reingasauslass 33 geleitet, wo es den Kopf 12 verlassen kann. Bei der dargestellten Ausführung wird das Abscheideelement 19 von außen nach innen durchströmt. Bei anderen Ausführungen kann das Abscheideelement 19 auch von innen nach außen durchströmt werden. Hierbei werden dann Ein- und Auslässe 24, 31 bzw. Roh- und Reinräume 26, 32 vertauscht. Die abgeschiedenen Flüssigkeitströpfchen werden in den unteren Bereich des Abscheidemediums geleitet, von wo aus sie in den Aufnahmeraum 38 eintreten. Die gesammelten Flüssigkeitströpfchen werden durch die Austrittsöffnung 36 in den Ablauf 37 geleitet. Die Flüssigkeit kann anschließend einem erneuten Verbrauchsprozess zugeführt oder entsorgt werden.

In Figur 2 ist ein Ausschnitt X von dem Abscheidemedium 22 gemäß Figur 1 dargestellt. Das Abscheidemedium 22 verfügt über einen in Strömungsrichtung außen liegenden groben Glasfaserwickel 39 und einen feineren Glasfaserwickel 40, welcher mit Phenolharz getränkt ist. Die Glasfaserwickel 39, 40 sind mit einem Stützrohr 41 mechanisch stabilisiert. Zwischen dem Stützrohr 41 und einem Innenrohr 42 ist ein Drainagevlies 43 angeordnet, welches z. B. aus Polyester besteht. In dem Drainagevlies 43 werden die Flüssigkeitströpfchen gesammelt und in Schwerkraftrichtung nach unten abgeleitet. Alternativ zu dem beschriebenen Aufbau können auch mehrere Glasfaserwickelschichten oder Drainagevliesschichten angeordnet sein.

## Patentansprüche

1. Flüssigkeitsabscheider, insbesondere Ölabscheider für Druckluftanlagen, aufweisend ein Abscheideelement (19) und ein Gehäuse (15), wobei das Gehäuse (15) einen Deckel (17) und einen Topf (16) umfasst und der Deckel (17) über einen Einlass (24) für das zu reinigende Gas und einen Auslass (31) für das gereinigte Gas verfügt, wobei das Abscheideelement (19) dichtend in dem Gehäuse (15) angeordnet ist und das Gehäuse (15) lösbar mit einem Gegenpart (12) verbindbar ist, **dadurch gekennzeichnet, dass** das Gehäuse (15) mit einer Bajonettverbindung (11) mit dem Gegenpart (12) verbindbar ist, wobei die Bajonettverbindung (11) zwischen dem Deckel (17) und dem Gegenpart (12) bildbar ist, und wobei der Deckel über einen radial zwischen Auslass (31) und Einlass (24) angeordneten, mit dem Inneren des Abscheideelements (19) verbundenen Austritt (36) für die abgeschiedene Flüssigkeit verfügt.

2. Flüssigkeitsabscheider nach Anspruch 1, **dadurch gekennzeichnet, dass** der Austritt (36) in einem in Schwerkraftrichtung unteren Bereich des Deckels (17) angeordnet ist.

3. Flüssigkeitsabscheider nach Anspruch 1 oder 2, **dadurch gekennzeichnet, dass** das Gehäuse (15) mit einer Bajonettverbindung (11) mit dem Gegenpart (12) verbunden ist und der Austritt (36) mit einem Ablauf (37) korrespondiert, welcher in dem Gegenpart (12) angeordnet ist.

4. Flüssigkeitsabscheider nach einem der vorangehenden Ansprüche, **dadurch gekennzeichnet, dass** das Abscheideelement (19) dichtend mit dem Deckel (17) verbunden ist.

5. Flüssigkeitsabscheider nach einem der vorangehenden Ansprüche, **dadurch gekennzeichnet, dass** der Deckel (17) mit einer Bördelverbindung (18) mit dem Topf (16) verbunden ist.

6. Flüssigkeitsabscheider nach einem der vorangehenden Ansprüche, **dadurch gekennzeichnet, dass** das Abscheideelement (19) über einen Stützkörper (41), ein Abscheidemedium (22) und ein Drainagevlies (43) verfügt, wobei das Abscheidemedium (22) und das Drainagevlies (43) mit dem Stützkörper (41) verbunden sind.

## Claims

1. Liquid separator, in particular oil separator for compressed-air systems, featuring a separating element (19) and a housing (15), wherein the housing (15) comprises a cover (17) and a pot (16) and the cover (17) has an inlet (24) for the gas to be purified and an outlet (31) for the purified gas, wherein the separating element (19) is sealingly disposed in the housing (15) and the housing (15) is detachably connectable to a counterpart (12), **characterized in that** the housing (15) is connectable to the counterpart (12) by means of a bayonet connection (11), wherein the bayonet connection (11) is formable between the cover (17) and the counterpart (12), and wherein the cover has an exit (36) for the separated liquid radially disposed between outlet (31) and inlet (24) and connected to the inside of the separating element (19).

2. Liquid separator according to claim 1, **characterized in that** the exit (36) is disposed in a lower area of the cover (17) in the direction of gravity.

3. Liquid separator according to claim 1 or 2, **characterized in that** the housing (15) is connected to the counterpart (12) by means of a bayonet connection (11) and that the exit (36) corresponds with a discharge (37), which is disposed in the counterpart (12).

4. Liquid separator according to one of the above claims, **characterized in that** the separating element (19) is sealingly connected to the cover (17).

5. Liquid separator according to one of the above claims, **characterized in that** the cover (17) is connected to the pot (16) by means of a flared connection (18).

6. Liquid separator according to one of the above claims, **characterized in that** the separating element (19) has a support member (41), a separating medium (22) and a non-woven drainage fabric (43), wherein the separating medium (22) and the non-woven drainage fabric (43) are connected to the support member (41).

## Revendications

1. Séparateur de liquide, notamment séparateur d'huile pour installations à air comprimé, présentant un élément séparateur (19) et un boîtier (15), dans lequel le boîtier (15) comprend un couvercle (17) et un pot (16) et le couvercle (17) dispose d'une entrée (24) pour le gaz à purifier et d'une sortie (31) pour le gaz purifié, dans lequel l'élément séparateur (19) est disposé de manière étanche dans le boîtier (15) et le boîtier (15) peut être relié à un contre-élément (12), **caractérisé en ce que** le boîtier (15) peut être relié au contre-élément (12) au moyen d'un joint à baïonnette (11), dans lequel le joint à baïonnette (11) peut être formé entre le couvercle (17) et le contre-élément (12), et dans lequel le couvercle dispose d'un écoulement (36) pour le liquide séparé disposée radialement entre la sortie (31) et l'entrée (24) et reliée à l'intérieur de l'élément séparateur (19).

2. Séparateur de liquide selon la revendication 1, **caractérisé en ce que** l'écoulement (36) est disposé dans une partie inférieure du couvercle (17) en direction de la force de gravité.

3. Séparateur de liquide selon la revendication 1 ou 2, **caractérisé en ce que** le boîtier (15) est relié au contre-élément (12) au moyen d'un joint à baïonnette (11) et que l'écoulement (36) correspond avec une évacuation (37) disposée dans le contre-élément (12).

4. Séparateur de liquide selon l'une des revendications précédentes, **caractérisé en ce que** l'élément séparateur (19) est relié de manière étanche au couvercle (17).

5. Séparateur de liquide selon l'une des revendications précédentes, **caractérisé en ce que** le couvercle (17) est relié au pot (16) au moyen d'un sertissage (18).

6. Séparateur de liquide selon l'une des revendications précédentes, **caractérisé en ce que** l'élément séparateur (19) dispose d'un corps de support (41), d'un média séparateur (22) et d'un non-tissé de drainage (43), dans lequel le média séparateur (22) et le non-tissé de drainage (43) sont reliés au corps de support (41).
